# FASCICULE DE BREVET EUROPEEN

(11) **EP 0 573 354 B1**
(45) Date de publication et mention de la délivrance du brevet: **07.08.1996**
(21) Numéro de dépôt: 93401408.5
(22) Date de dépôt: 02.06.1993
(51) Int. Cl.: H04L 29/06

(54) **Serveur à haut débit**
Hochdurchsatzdatenanbieter
High-throughput server

(30) Priorité: 05.06.1992 FR 9206885
(43) Date de publication de la demande: 08.12.1993
(73) Titulaire: FRANCE TELECOM, F-75015 Paris (FR); TELEDIFFUSION DE FRANCE, F-75732 Paris Cédex 15 (FR)
(72) Inventeur: Babonneau, Gérard, F-75116 Paris (FR)
(74) Mandataire: Schmit, Christian Norbert Marie

(56) Documents cités:
- EP-A- 0 303 830
- WO-A-91/20144
- US-A- 4 545 043

## Description

La présente invention a pour objet un serveur à haut débit utilisable pour envoyer des données extraites de bases de données à des usagers connectés à la demande à ces bases, par exemple au travers d'un réseau public de télécommunications.

Le but de l'invention est d'adapter le débit des données extraites de la base de donnée, débit forcément limité technologiquement par les matériels et logiciels par lesquels la base de données est accessible, à un débit utile, dépendant du nombre simultané des usagers. Ce débit utile est susceptible d'être très élevé. Le serveur est constitué par ces matériels et logiciels d'extraction.

On connaît voir par exemple WO-A-9 120 144 ainsi des serveurs d'information dont le débit nominal est aujourd'hui de l'ordre de 1,50 à 6 Mbits par seconde. Ce débit correspond à la consultation de séquences audio-visuelles, simultanément, par quelques usagers. On envisage d'en desservir un grand nombre.

Les bases de données dont il est question dans l'invention peuvent être de type quelconque, mais elles concernent de préférence les bases de données de type audio-visuel dans lesquelles des informations d'image et ou auditives sont stockées sous forme d'images fixes, éventuellement associées à des séquences sonores, et sous forme de séquences d'images éventuellement sonorisées. On sait en effet, notamment avec la numérisation des images et des sons, stocker maintenant de nombreuses séquences d'images ou de sons avec en particulier l'apport de la compression. Compte tenu des exigences de plus en plus marquées vers des images dites de haute définition, il est à prévoir que le débit d'information à transmettre pour une consultation d'une séquence d'images et de sons ira en augmentant, au profit de la qualité du signal reçu. Une particularité des informations de type audio-visuel est que la quantité d'informations à transmettre dépend de la longueur de la séquence choisie par l'usager. On envisage ainsi des séquences d'une à plusieurs minutes de durée ce qui, même en comprimant fortement les images, conduit à la transmission d'une quantité importante d'information, parfois dépassant les 10 Mega octets.

Un autre exemple de mise en service de telles bases de données est décrit dans un article intitulé "Object placement in parallel hypermedia system" dû à Messieurs Shahram Ghandeharizadeh et Al et divulgué dans les comptes rendus de conférences de la dixième conférence sur les très grandes bases de données, à Barcelone, en Septembre 1991, pages 243 à 254. Dans cet exemple il est envisagé une consultation de l'encyclopédie :"Compton's multimedia encyclopaedia".

Il est fait état dans cet article d'une difficulté de présenter les images vidéo parce que celles-ci impliquent un débit d'information de 60 Mbits par seconde alors que les dispositifs classiques de stockage de données, notamment les disques durs de micro-ordinateurs, ne sont capables que d'un débit de 5 à 10 Mbits par seconde. La solution préconisée par cet article pour résoudre ce problème consiste à répartir la base de données entre plusieurs supports de stockage. Cette répartition est faite de telle façon qu'une même séquence, à diffuser à un usager qui la réclame, n'est pas prélevée sur un seul support mais est prélevée blocs par blocs sur des supports différents. Par suite la bande passante requise pour la transmission en temps réel est obtenue par agrégation des bandes passantes élémentaires dont sont capables ces supports. En pratique les sorties de ces supports doivent être multiplexées avant d'être transmises, de telle façon que du coté de la réception on atteigne le débit requis. En outre, compte tenu de ce que chaque support, au moment où il doit intervenir, possède un débit inférieur au débit requis, cet article évoque encore la possibilité que chaque support précharge une mémoire tampon avec une partie d'un bloc de données extrait, de telle façon que le système de lecture lise d'une part les données stockées dans cette mémoire tampon et d'autre part les données distribuées en fin de partie par le support lui même.

Malgré tous les avantages présentés par cette technique, celle-ci ne résout pas le problème cité ci-dessus. Un objet de la présente invention est dans ce but d'exploiter la capacité en débit d'une telle base de données, non pas à destination d'un seul usager requérant un très gros débit d'information, mais à destination de nombreux usagers recevant chacun un débit plus modeste, de manière à ce que la totalité des débits extraits soit dans les limites physiques de la machine. Ainsi, en supposant que le débit maximum de la base de données permette de desservir vingt usagers simultanément, lorsque le vingt et unième se présente, la base de données est complètement occupée et cet usager ne peut pas être satisfait. Cette contrainte peut être d'autant plus désagréable à supporter pour l'usager que les séquences diffusées peuvent être longues. S'il s'agit d'attendre une minute le problème peut ne pas être trop grave, par contre si les séquences sont de l'ordre de dix ou quinze minutes l'attente est rédhibitoire.

L'invention pallie une autre contrainte liée à la longueur des séquences. Il n'est pas possible en effet de les stocker en totalité sur un terminal d'usager. Le volume d'information est trop grand. De plus les mémoires de masse de ces terminaux n'ont pas non plus le débit suffisant pour les diffuser correctement. Il faut donc les afficher dans ces terminaux en temps réel, c'est à dire sans rupture de séquence pour chacun des usagers desservis. Ce problème, particulièrement sensible pour les séquences audiovisuelles, est résolu par l'invention en même temps que la desserte de plusieurs usagers.

Dans l'invention, pour résoudre ces problèmes on a mis en évidence les spécificités propres aux séquences audio-visuelles que souhaitent recevoir les usagers.

D'une part, contrairement à la consultation d'une base de données de type classique, il apparaît vraisemblable que le nombre des séquences enregistrées et donc demandables par des usagers ne sera pas trop élevé. On a alors remarqué, dans le cas d'une consultation simultanée par un grand nombre d'usagers, qu'il était probable que des requêtes identiques soient présentées assez fréquemment pour se faire servir des mêmes séquences.

Dans l'invention on a alors eu l'idée pour remédier aux inconvénients cités de faire attendre un certain temps un demandeur avant de lui servir la séquence qu'il réclame. Pendant ce temps d'attente, on détecte les demandeurs qui souhaitent recevoir la même séquence. Au bout de ce temps d'attente, si plusieurs demandeurs se sont prononcés pour la diffusion de la même séquence celle-ci leur est diffusée à tous en même temps. On peut alors multiplier le débit de la base de données, par le nombre de demandeurs qui souhaitent voir la même séquence en même temps, sans par ailleurs avoir à modifier en quoi que ce soit la technologie d'extraction des données de la base de données.

Pour amener ce résultat, on utilise un circuit de multiplexage susceptible de réaliser des interconnexions des sorties de la base de données vers des usagers. Ce circuit interposé entre la sortie de la base de données et les usagers permet de connecter plusieurs usagers à une même sortie de base. Ce circuit multiplexeur est dans un exemple préféré un multiplexeur temporel. Il peut cependant être aussi un multiplexeur spatial. On peut alors, par exemple avec un temps d'attente de l'ordre de une à cinq secondes, soit périodique soit consécutif à une première demande, augmenter considérablement le débit de diffusion des données de la base. Le serveur d'information de la base de données devient alors un serveur à plus haut débit.

Par ailleurs, en fragmentant les séquences en blocs de données, les blocs étant stockés en répartition dans différents supports d'information, on montre que le temps d'attente des usagers du fait de l'occupation de la base peut devenir négligeable, de l'ordre de la fraction de seconde. Si, dans ce contexte, cette base de données est de plus sollicitée en même temps par des usagers multiples demandant non plus des séquences identiques mais des séquences différentes, des problèmes de conflits d'extraction simultanée de différents blocs de données hors d'un même support peuvent se présenter. En effet, étant donné le grand nombre de séquences audiovisuelles extraites simultanément du serveur, la gestion de celui-ci devient aléatoire, et il peut se présenter des risques de rupture de la transmission des blocs donc de la transmission des séquences. L'invention résout également ce problème en constituant, selon une autre forme de réalisation, une mémoire tampon dans laquelle les blocs extraits sont stockés, au fur et à mesure de leur extraction. Ils y sont alors stockés soit à des adresses de stockage correspondant à l'ordre de leur extraction, de concert avec un index montrant leur place réelle dans la séquence, soit, de préférence, à des adresses dans la mémoire tampon qui sont directement consécutives à des adresses de blocs de données qui doivent normalement être émis immédiatement avant ces blocs de données. Dans ce cas le serveur n'est jamais neutralisé par des attentes de résolution de ces conflits car chaque séquence envoyée, à un ou plusieurs usagers, est constituée dynamiquement en une réserve d'information. Le volume de cette réserve est suffisant pour amortir les conflits d'extraction qui peuvent se produire au sortir des supports.

De préférence, bien entendu, la mémoire tampon sert à jouer les deux rôles: le rôle de l'attente pour repérer tous les usagers qui demandent une même séquence, et le rôle de tampon pour amortir les problèmes de conflit d'extraction qui se sont posés.

L'invention a donc pour objet un serveur à haut débit pour desservir plusieurs usagers simultanément, comportant
- une base de séquences de données consultables par ces usagers,
- des circuits d'interconnexion de cette base avec ces usagers,
- et des circuits d'extraction pour extraire des séquences de données hors de cette base en fonction de requêtes émises par ces usagers,
caractérisé en ce qu'il comporte
- des moyens pour retarder un transfert d'une séquence de données à un usager, et en ce que
- les circuits d'interconnexion comportent des moyens pour transmettre simultanément à plusieurs usagers une même séquence de données.

L'invention a également pour objet un serveur à haut débit pour desservir des usagers, comportant
- une base de séquences de données consultables par ces usagers, chaque séquence de données étant constituée de plusieurs blocs de données répartis en stockage dans différents supports de mémorisation de données,
- des circuits d'interconnexion des supports de cette base avec ces usagers, pour extraire des séquences de données hors de cette base en fonction de requêtes émises par ces usagers, et pour les émettre à destination de ces usagers,
caractérisé en ce que ces circuits d'interconnexion comportent
- une mémoire tampon pour stocker des blocs de données extraits de ces supports avant leur émission,
- et des moyens pour arranger dans cette mémoire temporaire ces blocs de données extraits dans un ordre correspondant à un bon déroulement de l'émission des séquences et indépendant de l'ordre de leur extraction.

L'invention sera mieux comprise à la lecture de la description qui suit et à l'examen des figures qui l'accompagnent. Celles-ci ne sont données qu'à titre indicatif et non limitatif de l'invention. Les figures montrent :
- Figure 1 : une représentation schématique du serveur à haut débit selon l'invention;
- Figures 2 et 3 : des organigrammes d'opérations effectuées par le serveur de l'invention pour desservir plusieurs usagers simultanément;
- Figure 4 : un diagramme temporel montrant l'évolution du transfert des blocs au cours de la diffusion d'une séquence.

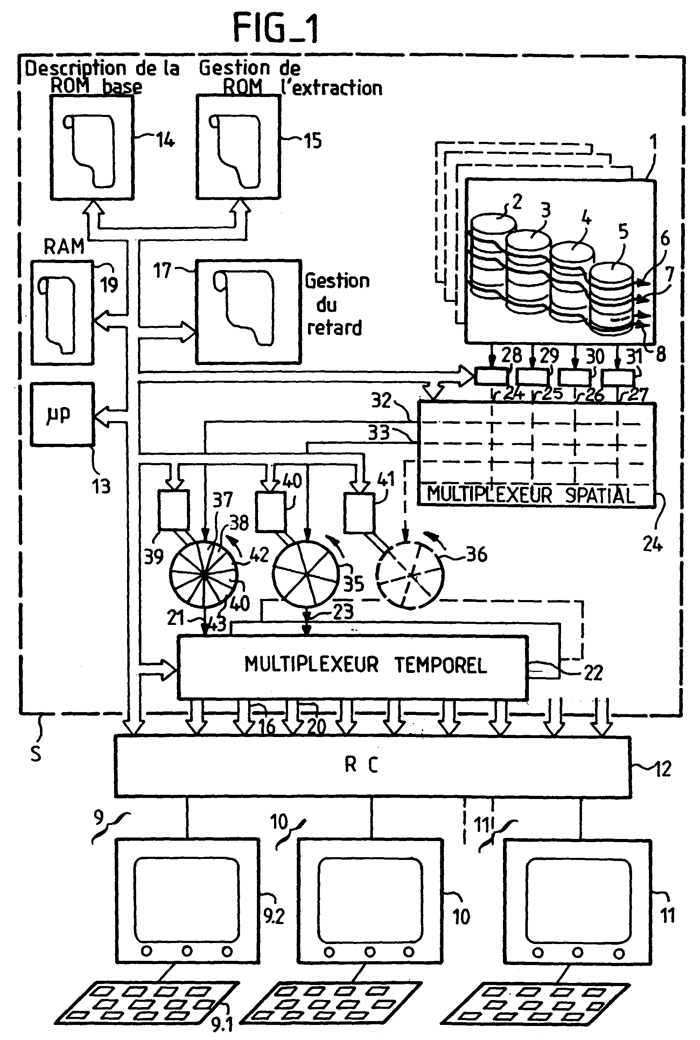

La figure 1 montre un serveur S à haut débit selon l'invention. Ce serveur S comporte une base de données 1 qui, dans l'application préférentiellement envisagée par l'invention, est une base de séquences de données audio-visuelles. La base de données 1 peut comporter, selon l'enseignement de l'article cité ci-dessus, plusieurs supports de stockage d'information, tels que 2 à 5, dans lesquels une même séquence peut être répartie de manière à obtenir un débit nominal de sortie des données de la séquence supérieur au débit nominal de chacun des supports. La base 1 peut contenir ainsi plusieurs séquences, par exemple les séquences 6 à 8. Chaque séquence comporte un certain nombre de blocs de données. Ces blocs de données, dont la taille est par exemple de 16 Kilo octets, sont rangés dans les supports 2 à 5 successifs en fonction de leur rang chronologique dans la séquence. Pour N supports utilisés on a ainsi des groupes de N blocs de données successifs. Le premier bloc d'un groupe est rangé dans un premier support et ainsi de suite jusqu'au Nième bloc du groupe qui est rangé dans le Nième support. Les groupes de blocs de données d'une séquence sont également organisés chronologiquement et rangés dans les mêmes N supports de manière à ce que des blocs de données d'un groupe suivant se trouvent rangés également dans les N supports directement après les blocs de données du groupe précédent.

Des usagers, par exemple des usagers tels que 9 10 et 11, sont connectés à la base 1 du serveur S par exemple par l'intermédiaire d'un réseau de télécommunication 12 dont le débit est dimensionné pour acheminer les séquences. Le réseau 12 peut être un réseau spécialisé appartenant en toute propriété à la communauté des usagers 9 à 11, ou un réseau public de type RNIS (réseau numérisé à intégration de services) ou asynchrone de type V2I ou ATM (Asynchronous Transmission Mode) ou privé de type FDDI ou Ethernet.

La base de données 1 est connectée, au delà du réseau 12, avec les usagers 9 - 11 par l'intermédiaire de circuits d'interconnexions. Ces circuits d'interconnexions comportent d'une part des circuits de types classiques et d'autre part des circuits selon l'invention. L'extraction des informations, hors des disques constituant la base de données 1, vers les usagers 9 à 11 est réalisée par des circuits d'interconnexion et des circuits de gestion et de contrôle des transferts. Ces circuits peuvent comporter des microprocesseurs. Ils sont reliés entre eux soit par un bus unique soit par des bus spécifiques. Ils peuvent également être reliés entre eux par des moyens de transfert de données comportant des transputers qui sont des organes capables de traiter des informations en même temps qu'ils en transmettent d'autres. Ce traitement pouvant comporter un stockage temporaire. Le terme circuit doit donc s'entendre au sens large. Il n'est pas limité à l'aspect purement matériel de ces circuits. Ces circuits comportent notamment des microprocesseurs, tel que le microprocesseur central 13, susceptibles de faire exécuter des programmes d'instructions contenus dans des mémoires programmes telles que les mémoires 14 et 15.

Le fonctionnement classique du serveur S est le suivant. Lorsqu'un usager 9 veut se connecter à ce serveur S, cet usager 9 fait exécuter au moyen d'une console de commande, contenant un microprocesseur, un clavier de commande 9.1 et un écran 9.2 de visualisation, un protocole de connexion au serveur S. Sur l'écran de visualisation 9.2 l'usager peut voir d'une part le déroulement des opérations de connexion. Il pourra par ailleurs recevoir sur cet écran les images diffusées en provenance de la base 1.

Une fois que la connexion avec le serveur S est établie, le microprocesseur central 13 du serveur S prend la main sur la connexion. En fonction d'une description de la base de données contenue dans une mémoire 14, le microprocesseur 13 envoie à l'usager 9, sur son écran 9.2, des données, par exemple de type videotext (donc à protocole simplifié), qui constituent une forme compréhensible par l'usager de la description de cette base. Cette description peut comporter tout simplement une nomenclature de toutes les séquences de données telles que 6 à 8 consultables avec la base 1. Au moyen du clavier 9.1, l'usager 9 est ensuite amené à choisir la séquence qu'il veut recevoir. Une fois que ce choix est fait, le microprocesseur central 13 lance l'extraction de la séquence choisie, au besoin en utilisant un programme de gestion de l'extraction contenu dans une mémoire 15. Les séquences audiovisuelles sont organisées comme dans l'article cité: elles sont fragmentées en blocs de longueur limitée qui sont répartis sur plusieurs disques, par exemple selon une technique de ROUND-ROBIN. Chacun des fragments est accessible par un système de gestion de fichier ou un système de gestion ou base de données dont les techniques sont connues par ailleurs. Cependant dans une variante préférée, décrite ci après, la caractéristique de l'attente est combinée avec la caractéristique de la partition des séquences. La séquence extraite de la base 1 est ensuite envoyée sur un port 16 du serveur S et aboutit sur l'écran 9.2 de l'usager 9.

Dans l'invention, pour multiplier le débit du serveur S, on a choisi de ne pas provoquer l'extraction et ou la diffusion, mais de préférence la diffusion, de la séquence dès que la requête émise par l'usager a été envoyée au serveur S. Au contraire on provoque un retard. Ce retard est géré sur la figure 1 par une mémoire 17 comportant un programme de gestion du retard et de déclenchement du début d'émission de la séquence, en fin de retard. Lors de l'extraction de la séquence hors de la base 1, on exécute le programme d'extraction contenu dans la mémoire 15. Les mémoires 15 et 17 sont de préférence associées à des microprocesseurs propres qui mettent en oeuvre les programmes d'extraction et de gestion du retard.

Pendant la durée de ce retard, qui peut être d'une fraction de seconde à quelque secondes, on attend de savoir si un autre usager demande la diffusion de la même séquence. Statistiquement, si la séquence a de l'intérêt, un autre usager, par exemple l'usager 10, demandera la même séquence avant la fin de ce retard. Compte tenu du temps de réflexion de l'usager 10, sa demande n'est validée que par son action finale de requête en diffusion de la séquence.

Pour mettre en oeuvre l'invention, dans une solution, on a choisi de constituer dans une mémoire dynamique 19 une liste d'usagers: les usagers 9 et 10 qui désirent recevoir la même séquence sont mentionnés dans la liste relative à cette séquence. La mémoire 19 peut physiquement être la même mémoire que la mémoire 17, associée à un microprocesseur propre qui met en oeuvre le retard. Les listes en mémoire 19 comportent les adresses des ports de sortie du serveur S, les ports 16 et 20, auxquels sont raccordés ces usagers 9 et 10. Une fois que la requête a été établie, pour le premier usager 9, on détermine sur quel port de sortie 21 de la base 1 de données sera diffusée la séquence appelée. Une liste de la mémoire 19 est donc en pratique une liste dévolue dynamiquement au port 21 et à la séquence en attente de commencement.

Il est connu, par des circuits de connexion 22, par exemple analogues à ceux du réseau commuté 12, de connecter le port de sortie 21 de la base au port de sortie 16 du serveur S de manière à diffuser la séquence à l'usager 9.

Un circuit d'interconnexion 22 qui se charge de cette opération est un multiplexeur. Dans l'invention, il est susceptible d'assurer une diffusion sélective. La diffusion concerne l'envoi d'un message, d'une séquence, simultanément à tous les usagers possibles. La sélection concerne la réalisation de cette diffusion à des usagers choisis. Un tel circuit 22 peut par ailleurs être intégré au réseau 12 ou à la base de données 1. Sa présentation externe ici est surtout liée à la nécessité d'en expliquer le fonctionnement.

Ce circuit 22 de l'invention comporte de préférence un multiplexeur temporel comportant M entrées reliées à la base et P sorties reliées aux usagers. Ce multiplexeur est capable de connecter n'importe laquelle de ses M entrées à n'importe laquelle des P sorties. Le multiplexeur 22 de l'invention a la capacité à débiter les données successivement aux sorties 16, 20 et autres, à un rythme bien supérieur au rythme normal de transmission de ces données, si bien qu'il est même capable de desservir s'il le faut les P sorties à partir d'une seule entrée. Par exemple si les données à transmettre sont de type audio-visuel, ce débit normal est lié à un affichage de ces données sur les écrans 9.2. Le circuit 22 comporte de préférence des mémoires tampons pour débiter ensuite dans les écrans 9.2 à un rythme compatible avec celui accepté par ces écrans 9.2 les données reçues à débit élevé.

De cette particularité on tire avantage. Ainsi après avoir envoyé un bloc de données au port 16, on envoie le même bloc de données au port 20, puis encore à un autre port si nécessaire, du moment que cet autre port correspond lui aussi à un usager mentionné dans la liste 19. Ainsi, si le débit du multiplexeur temporel est dix fois supérieur au débit normal, on peut connecter jusqu'à dix usagers en même temps à une même sortie 21 de la base. On peut même augmenter ce nombre si on place des autres multiplexeurs en aval du multiplexeur 22. Pour les usagers il n'y a quasiment aucun retard à la visualisation car, avec un multiplexeur temporel ayant un débit de 150 Mbits par seconde, la transmission de dix fois un même bloc de 16 Kilo octets, à dix usagers différents, ne dure que 8 ms. Dans l'invention, avec un multiplexeur temporel on connecte à plusieurs reprise une même sortie 21 à plusieurs usagers. De ce fait le débit utile de sortie de la base est multiplié par les performances du multiplexeur temporel.

Cette réalisation peut néanmoins être remplacée par tout autre système, notamment une interconnexion multiplex spatiale, de type CROSSBAR, ou encore par un système de communication avec un bus d'ordinateur et un adressage de destination des données. Normalement dans un circuit de connexion multiplex spatial on connecte une sortie à seulement un usager. Dans l'invention on modifiera un tel circuit pour connecter, à la demande, une même sortie 21 à plusieurs usagers. Il suffit de connecter électriquement plusieurs ports 16 à une sortie 21. Le circuit 22 peut aussi être intégré au circuit de sortie de la base de donnée 1. La seule particularité de ce circuit est qu'il doit permettre maintenant, selon l'invention, la diffusion à au moins deux usagers différents d'une même information, alors qu'auparavant d'une manière classique ce type d'emploi était interdit.

Bien entendu si la base de données 1 est sollicitée en même temps par un autre ensemble d'usagers, qui veulent visualiser une autre séquence, il y a constitution d'une autre liste en mémoire 19 ainsi que le déclenchement d'un autre retard provoqué par le programme 17. A titre d'exemple on a représenté à une autre entrée 23 du circuit 22, une autre extraction d'une autre séquence de la base de données 1, diffusée à des autres demandeurs, simultanément à la diffusion aux usagers 9 et 10 de la première séquence étudiée jusqu'ici.

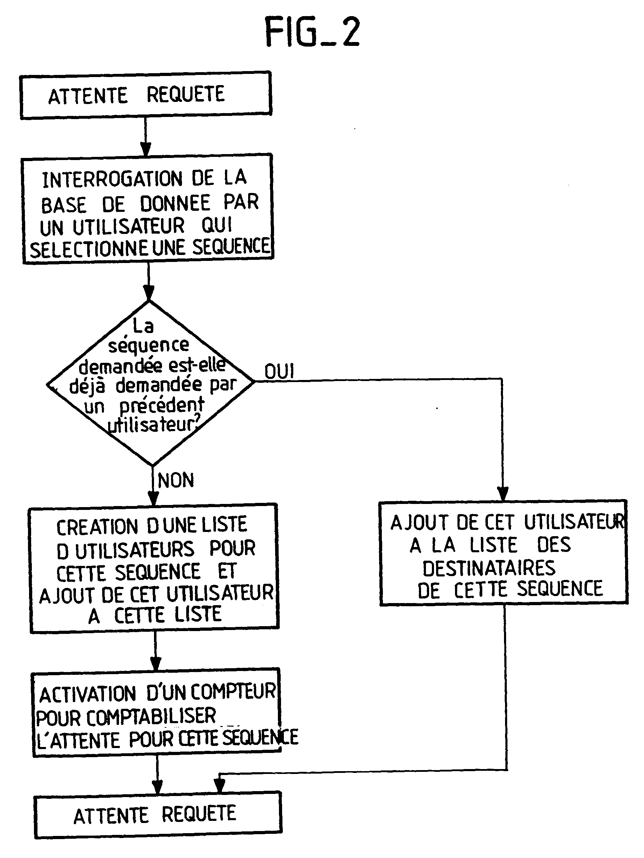

La figure 2 montre l'organigramme d'une partie du programme de gestion des retards selon l'invention exécutée par le microprocesseur central 13 ou par les microprocesseurs associés aux mémoires 17 et 19. En temps normal, ces microprocesseurs sont en attente de requête. Lorsqu'un demandeur, le demandeur 9, établit une requête, il interroge la base de données pour sélectionner une séquence. Le programme comporte alors un test pour savoir si la séquence demandée a déjà été demandée par un précédent usager. Quand ce n'est pas le cas, le programme comporte des instructions pour provoquer la création d'une liste d'usagers pour cette séquence. Typiquement il s'agit de la création de la liste en mémoire 19. En même temps le programme provoque l'activation d'un compteur pour comptabiliser l'attente pour cette séquence. Une fois que ces opérations sont faites, le microprocesseur concerné se met à nouveau en attente de requête pour voir apparaître une requête suivante. Lorsque la requête suivante se présente, pour la même séquence, le programme a pour objet d'ajouter l'usager supplémentaire à la liste des destinataires pour cette séquence.

En fait, au moment où le programme crée la liste 19 pour le premier usager 9, il choisit aussi une sortie de base 21 parmi toutes les sorties possibles dans le circuit 22. Lorsque l'usager 10 se présente, l'ajout de l'usager à la liste comporte également la mise en commun d'un chemin de diffusion de l'information. A la fin de la période d'attente, la séquence demandée est diffusée.

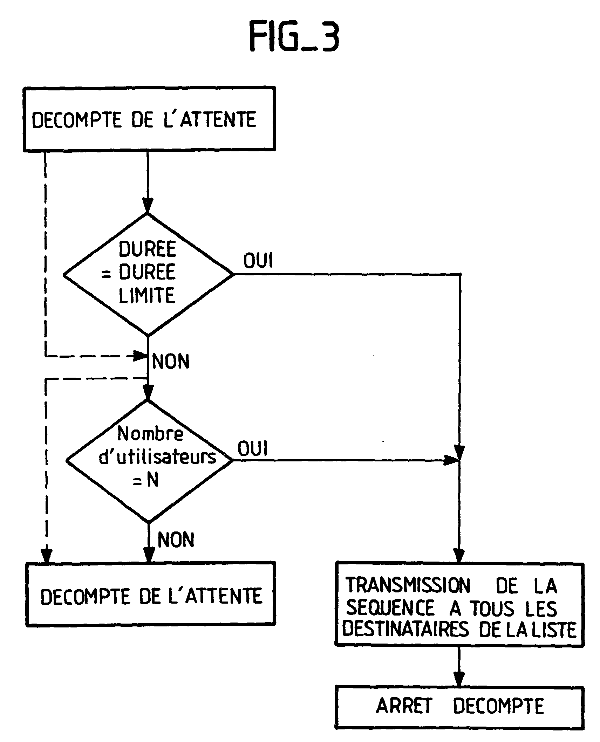

La figure 3 montre un organigramme de décompte de l'attente. En pratique il est possible d'organiser l'attente de différentes manières. D'une part, on peut déterminer que l'attente sera une attente de durée limitée. Dans ce cas cette attente peut être déclenchée par la présentation d'une requête comme ce qui a été vu jusqu'à présent. Ou bien l'attente peut être déclenchée périodiquement au moyen d'une horloge pilotée par le microprocesseur central 13. Une autre manière de faire consiste à provoquer un retard dont la durée n'est pas fixe mais dont la durée est variable. Le caractère variable de cette durée peut alors être dû au nombre des demandeurs qui sont intéressés par la même séquence.

Le décompte de l'attente se présente donc de la manière suivante dans la première variante. Si la durée limite n'est pas atteinte, le décompte de l'attente se poursuit. Par contre si la durée limite est atteinte, ou si un nombre maximum d'usagers est reconnu, la séquence requise est transmise à tous les destinataires de la liste en même temps que l'arrêt du décompte est provoqué. En variante le décompte de l'attente peut consister à mesurer périodiquement le nombre d'usagers ayant demandé une séquence et qui sont identifiés dans une liste. Si ce nombre est inférieur à un nombre limite N, l'attente se poursuit. Par contre si ce nombre d'usagers atteint le nombre limite N, le déclenchement de la transmission de la séquence se produit en même temps. A l'issue de la transmission la liste, dans les deux cas, est effacée. Bien entendu il est possible de coupler la notion de durée limite et du nombre limite d'usagers pour déclencher la diffusion. D'une manière préférée dans ce cas le nombre N ne sera pas un nombre constant mais sera un nombre dépendant d'une mesure du nombre des usagers qui ont adressé une requête à la base pendant une période précédente. Plus ce nombre aura été important plus cette attente sera longue de manière à desservir encore plus de demandeurs la fois suivante. L'attente ne doit bien entendu pas être supérieure à la durée de la séquence car cela n'aurait aucun sens.

Pour mettre à disposition de la sortie 21 de la base la séquence qui doit être diffusée aux usagers, on utilise dans l'invention un multiplexeur 24, qui peut être de type spatial ou temporel mais qui est de préférence spatial. Ce multiplexeur 24 possède autant d'entrée qu'il y a de supports différents dans la base 1. Il possède autant de sorties qu'il y a de sorties telles que 21 prévues ou possibles pour la base. Les transferts des blocs de données entre les supports 2 à 5 de la base et les entrées correspondantes 24 à 27 du multiplexeur 24 sont gérées par des microprocesseur, respectivement 28 à 31. Ces microprocesseurs 28 à 31, agissant sous le contrôle du microprocesseur central 13, organisent l'extraction des blocs de données des groupes, successivement à partir des supports 2, puis 3, puis 4, puis 5, puis à nouveau 2 pour un groupe suivant et ainsi de suite. Les microprocesseurs 28 à 31 commandent les supports 2 à 5. Leur fonctionnement est le suivant. Ils sont chargés par une pile d'instructions d'extraction et exécutent les instructions de cette pile les unes après les autres.

Le multiplexeur 24 est schématiquement représenté comme un multiplexeur de type CROSSBAR. Pour une séquence, il reçoit successivement les blocs de données sur ses entrées 24 à 27 et, par établissement dynamique et synchronisé de ses connexions, oriente le transfert de tous les blocs de données reçus relatifs à la séquence vers une seule de ses sorties: par exemple ici la sortie 32 qui est donc en relation avec la sortie 21 évoquée précédemment. Le multiplexeur 24 possède dans un exemple un ou plusieurs microprocesseurs pour l'établissement dynamique d'une ou plusieurs connexions des microprocesseurs 28 à 31 avec les sorties 32 à 34. Le multiplexeur 24 peut, en même temps qu'il transmet une séquence sur la sortie 32, avoir à en transmettre une autre sur une autre sortie 33. Normalement cette autre séquence provient elle aussi des supports 2 à 5, ou des supports 3 et 4 seulement, ou d'une autre combinaison des supports. Cette combinaison est mémorisée dans la mémoire 15, et le microprocesseur 13 charge les instructions à exécuter par les microprocesseurs 28 à 32 en fonction de cette combinaison.

Il peut en résulter qu'un support, par exemple le support 3, peut être sollicité pour transmettre sur la sortie 32 un bloc de données correspondant à une séquence appelée, en même temps qu'il peut être sollicité pour transmettre à la sortie 33 un bloc de données correspondant à une autre séquence. Le support 3 ne peut pas accomplir ces deux tâches en même temps. Du fait de ce conflit, une des deux sorties 32 ou 33 devrait attendre, au détriment du débit global du serveur 1. Pour résoudre ce problème, on a interposé dans l'invention des mémoires tampons 34 à 36, associées à des microprocesseur 39 à 41, entre chacune des sorties 32 à 33 du multiplexeur 24 et les sorties réelles 21 ou 23 de la base 1. Ces mémoires tampons vont alors jouer les deux rôles de l'invention. D'une part, par la mémorisation temporaire elle vont retarder l'émission de la séquence extraite de la base de données. Ce retard est mis à profit pour distribuer en même temps, à tous les usagers qui le désirent, une même séquence.

D'autre part, lorsque des conflits d'extraction se présentent, les microprocesseurs 28 à 31 sont capables de réaliser en série les opération d'extraction des blocs de données hors des supports. Et, quand un microprocesseur doit exécuter simultanément deux extractions il les exécutent l'une après l'autre. Autrement dit une séquence est momentanément extraite avec un bloc de donnée en moins. Les blocs de données extraits sont stockés dans des cases mémoires telles que 37 et 38 des mémoires 34 à 36. Ce stockage est piloté par les microprocesseurs 39 à 41 respectivement associés à chacune des mémoires 34 à 36. Lors de ce stockage les blocs reçoivent une adresse de stockage qui s'incrémente naturellement avec le rang chronologique du bloc dans la séquence. De préférence si un bloc est manquant, la case mémoire est donc laissée vide. Dans ce cas la lecture de la mémoire tampon 34 à 36 sera séquentielle. En variante les blocs peuvent être chargés dans des cases dont les adresses s'incrémentent avec l'ordre d'arrivée des blocs. Dans ce cas on les affecte en plus d'un index relatif à leur place chronologique dans la séquence. Dans ce cas, la lecture de la mémoire tampon est aléatoire: elle respecte l'ordre croissant des index chronologiques.

Dès que le conflit disparaît, le microprocesseur 28 à 31 concerné par ce conflit intervient dans l'extraction de manière prioritaire pour extraire le bloc de données manquant. Par exemple un bloc a été extrait du support 2, un bloc n'a pas pu être extrait du support 3, et donc le bloc extrait suivant l'a été du support 4. Le bloc manquant de données extrait du support 3 est ensuite rangé par le microprocesseur 39 dans la mémoire tampon 34, de préférence à sa bonne place dans cette mémoire. Ceci ne retarde en rien les extractions sur les autres disques.

Les mémoires tampons 34 à 36 sont des mémoires tournantes dont la lecture est faite simultanément à l'écriture en mémoire. Il y a seulement un décalage entre les adresses de lecture et les adresses d'écriture. Les blocs de données stockés temporairement entre ces deux adresses correspondent au retard voulu par l'invention.

Ceci signifie que dans cette variante préférée l'extraction est anticipée. Elle est commencée dès que la première requête est enregistrée dans la liste 19, qui est créée à cette occasion. Par contre la diffusion est retardée. De préférence on effectue une extraction immédiate pour utiliser tout de suite les disques disponibles. Ainsi on ne prend pas le risque d'être en conflit d'extraction insoluble comme cela serait le cas si on attendait le dernier moment pour extraire.

Selon la variante préférée, on extrait en tout ou partie la séquence des supports 2 à 5, on la stocke en tout ou partie dans une mémoire tampon (à débit nominal suffisant), puis, en fin d'attente, on transmet cette séquence depuis cette mémoire tampon. On n'a alors besoin que d'une mémoire à débit nominal suffisant. Les supports peuvent être à débit plus lent. Surtout, avec le réarrangement des blocs on gère facilement les conflits d'extraction.

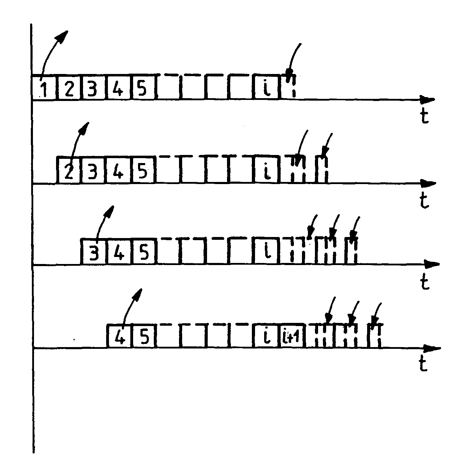

On procède alors, en référence à la figure 4, de la manière suivante. On utilise le fractionnement des séquences en blocs comme décrit dans l'article cité ci-dessus. On augmente alors le débit de la base 1 puisqu'un support étant responsable de l'envoi d'un bloc, dès que ce bloc a été envoyé ce support est a nouveau disponible pour envoyer un autre bloc à des autres usagers d'une autre liste. En outre l'attente est réduite au prorata du fractionnement de la séquence dans les supports. Dans ce cas la mémoire tampon auxiliaire n'a pas besoin de contenir toute la séquence et d'être volumineuse. Le microprocesseur 39 de chaque mémoire tampon exécute un processus chargé de gérer des anticipations pour l'émission de chaque séquence. Le même microprocesseur 39 exécute aussi la diffusion de la séquence aux usagers qui sont connectés à la sortie 21.

La gestion de l'anticipation consiste à charger les i premiers blocs d'une séquence dans une mémoire tampon 34. Pendant un temps T de chargement de cette mémoire tampon 34, on détecte les usagers faisant la demande de la même séquence. Le temps T d'attente peut être supérieur au temps de chargement dans la mémoire 34 des i premiers blocs. On peut différer le début du chargement de la mémoire tampon mais de préférence on l'entame dès qu'une première demande pour une séquence a été enregistrée. Pendant ce temps T, on paramètre la sortie 21 pour qu'elle assure aussi la future diffusion de la séquence à tout nouvel usager connecté. Une fois le temps T écoulé, la séquence commence à être envoyée sur le réseau 12 à tous les usagers qui ont été connectés.

Pour assurer la prise en compte d'un usager validant sa demande exactement à la fin de la durée T, un dispositif de type sémaphore, entre la base 1 et la mémoire 34, garantit que la demande n'est pas perdue. Autrement dit une autre liste 19' est créée pour une même séquence avant que la liste 19 pour cette séquence ne soit close et n'entraîne par sa clôture l'émission de la séquence.

L'émission de la séquence s'effectue ensuite de la manière suivante. Quand un bloc n est émis sur le réseau 12, le microprocesseur 39 demande à la base 1 de charger le bloc n+i dans la mémoire 34. Plusieurs situations peuvent se présenter selon que le chargement dans la mémoire 34 est plus rapide que l'émission sur le réseau 12 ou non, et selon que la base 1, le support concerné par la délivrance du bloc n+i, est disponible ou occupée.

Si le débit de chargement est plus rapide que l'émission, et si le support concerné de la base 1 est disponible, tout se passe bien. Si le chargement est moins rapide que l'émission sur le réseau 12, cela signifie en fait que le débit du support de stockage, du disque dur, est trop faible. Dans ce cas, figure 4, quand un bloc 1 est émis, un bloc i+1 est appelé pour être chargé. Quand un bloc 2 est émis, le bloc i+1 continue d'être chargé, pendant qu'un bloc i+2 est appelé. Quand un bloc 3 est émis, les blocs i+1 et i+2 continuent d'être chargés pendant qu'un bloc i+3 est appelé. Ainsi de suite, au fur et à mesure que le temps passe, les blocs sont émis à leur rythme d'émission sans que cela conduise à une rupture d'émission bien que chaque support débite à un débit faible. Il suffit simplement que i soit supérieur au rapport du débit en émission sur le débit d'extraction des supports. La valeur de i, avec une marge de sécurité, renseigne sur la capacité de la mémoire tampon nécessaire 34. Dans ce cas la sortie 32 du multiplexeur 24 est est fait dédoublée en autant de sortie possible qu'on souhaite que la mémoire 34 soit chargée simultanément par différents blocs. Avec les besoins présentés par la situation de la figure 4, il faut quatre sorties 32 pour une séquence. Ces quatre sorties 32 sont connectées respectivement aux entrées 37 38 42 et 43 de la mémoire 34. Quand cette mémoire 34 "tourne" en écriture, l'entrée 37 est connectée en amont de l'entrée 40, elle saute de quatre crans. Dans ce cas le multiplexeur 24 est occupé quatre fois plus longtemps par la diffusion d'une séquence. Ceci amène à prévoir un nombre important de support pour éviter les risque de conflit, mais le principe de l'invention reste le même.

Si un support disque est occupé, s'il ne peut pas envoyer un bloc i+n à la demande, ce bloc peut être envoyé par la suite. Les commandes d'extraction sont par exemple gérées par un mécanisme de pile du type premier entré premier sorti (FIFO). Les microprocesseurs 28 à 31 peuvent agir de façon asynchrone. Comme un bloc extrait est repéré par ailleurs par sa position dans la séquence, il sera placé par le microprocesseur 39 de la mémoire 34 à sa bonne place dans la mémoire tampon 34. Ou bien, si la lecture de cette mémoire tampon 34 n'est pas nécessairement séquentielle, le multiplexeur 22 exécute un microprogramme pour émettre les blocs dans le bon ordre.

On voit que ce mode préféré de fonctionnement permet de desservir plusieurs usagers, de gérer les problèmes d'écart entre les débits d'extraction et d'émission, de gérer au mieux les problèmes d'occupation de la base, tout en réglant le problème des conflits. En pratique les disques durs utilisés ont des débits de l'ordre de 5 Mbits par seconde alors que la diffusion des séquences selon la norme MPEG 1 requiert un débit de 1,5 Mbits par seconde. En appelant dans la mémoire tampon un nouveau bloc dès qu'un bloc précédent est émis, on résout simplement l'adaptation des débits. Il est donc possible d'extraire de hauts débits, que ce soit pour desservir simultanément de nombreux usagers avec des séquences de type MPEG1, ou des débits nettement plus élévés pour un nombre plus limité d'usagers, voire un seul usager avec un très fort débit, s'il est le seul à demander une telle séquence.

Le multiplexeur 22, les mémoires tampons 34, et les microprocesseurs 39 sont de préférence constitués, ensemble, par une machine à architecture parallèle. Une machine à architecture parallèle, ou massivement parallèle, est caractérisé par ce nombreux microprocesseurs, par exemple les microprocesseurs 13, 14, 15, 17, 19, 28 à 31 et 39 à 41, travaillant simultanément afin de se répartir le travail, et d'obtenir ainsi des temps de traitement beaucoup plus courts que ce que l'on obtient avec un microprocesseur unique même très performant. Chaque microprocesseur est spécialisé dans une partie de traitement qu'il effectue avec un maximum d'efficacité, et il échange les résultats intermédiaires qu'il produit, ou dont il a besoin, avec ses voisins.

Parfois, les données à traiter et les résultats obtenus sont exploités à partir de disques de la base 1 accessibles directement par la machine à architecture parallèle. Un système de gestion de fichiers répartis est ajouté dans la machine à architecture parallèle pour accéder directement aux données mémorisées sur de nombreux disques accessibles en parallèle, pour une grande efficacité. Les résultats (extraction de séquences audiovisuelles) produits par la machine à architecture parallèle sont envoyés directement sur un (des) réseau(x) de communication (à haut débit) 12 dont les interfaces, les microprocesseurs 39 à 41, sont intégrés dans la machine à architecture parallèle elle même. Une telle machine est par exemple à base de transputers, de type VOLVOX vendu par la société ARCHIPEL SA, Annecy, France, ou de type Tnode vendu par la Société TELMAT, Soultz, France.

## Revendications

1. Serveur (S) à haut débit pour desservir plusieurs usagers (9-11) simultanément, comportant
- une base (1) de séquences (6-8) de données consultables par ces usagers, chaque séquence de données étant constituée de plusieurs blocs de données répartis en stockage dans tout ou partie des supports de mémorisation de données,
- des circuits (12,22) d'interconnexion des supports de cette base avec ces usagers, pour extraire des séquences de données hors de cette base en fonction de requêtes émises par ces usagers, et pour les émettre à destination de ces usagers,
caractérisé en ce que ces circuits d'interconnexion comportent
- une mémoire tampon (43) pour stocker temporairement des blocs de données extraits de ces supports, avant leur émission, et pour ainsi retarder un transfert d'une séquence de données à un de ces usagers,
- des circuits pour transmettre simultanément à plusieurs usagers une même séquence de données,
- et des moyens (39-41) pour émettre hors de cette mémoire tampon, à l'issue de ce retard, des blocs de données qui y sont stockés, dans un ordre correspondant à un bon déroulement des séquences, cet ordre étant indépendant de l'ordre temporel de leur extraction hors de la base.

2. Serveur selon la revendication 1, caractérisé en ce que les moyens pour retarder comportent des moyens (17) pour retarder l'émission par rapport à l'extraction.

3. Serveur selon l'une des revendications 1 à 2, caractérisé en ce que les moyens pour retarder comportent des circuits pour retarder d'une durée limitée par une valeur fixe.

4. Serveur selon la revendication 3, caractérisé en ce que les moyens pour retarder d'une durée limitée par une valeur fixe sont déclenchés par une première requête d'un usager.

5. Serveur selon la revendication 3, caractérisé en ce que les moyens pour retarder d'une durée limitée par une valeur fixe sont déclenchés périodiquement.

6. Serveur selon l'une des revendications 1 à 5, caractérisé en ce que les moyens pour retarder la transmission d'une séquence de données à un premier usager comportent des circuits pour retarder cette transmission d'une durée variable qui commence avec la requête de ce premier usager et qui se termine lorsque le nombre des usagers qui adressent des requêtes identiques à cette base atteint un nombre (N) fixé par avance.

7. Serveur selon la revendication 6, caractérisé en ce que le nombre fixé par avance est fixé à l'avance par un comptage du nombre des usagers qui adressent des requêtes à la base pendant une période donnée précédente, et en ce que ce nombre fixé par avance croit avec la fréquence de ces requêtes pendant cette période précédente.

8. Serveur selon l'une des revendications 1 à 7, caractérisé en ce qu'il comporte une machine à architecture parallèle pour constituer l'ensemble de la base de données, des circuits d'interconnexions, de la mémoire tampon, et des circuits de transmission.

9. Serveur selon l'une des revendications 1 à 8, caractérisé en ce qu'il comporte
- des moyens pour charger i premiers blocs d'une séquence dans une mémoire tampon (43), et
- des moyens (40) pour appeler le chargement d'un bloc de rang i+1 dans cette mémoire dès que le premier des i blocs qui y est chargé en est extrait, et ainsi de suite pour les blocs suivants.

10. Serveur selon la revendication 9, caractérisé en ce que le nombre i de blocs de données chargés initialement dans la mémoire tampon est supérieur au rapport du débit nominal de chacun des supports sur le débit nominal d'émission.

11. Serveur selon l'une des revendications 9 à 10, caractérisé en ce qu'il comporte
- des moyens (17) pour retarder une transmission d'une séquence de données à destination d'un usager, et en ce que
- les circuits d'interconnexion comportent des moyens (19) pour transmettre simultanément à plusieurs usagers une même séquence de données.

12. Serveur selon l'une des revendications 9 à 11 caractérisé en ce qu'il comporte
- des moyens pour établir la liste des usagers qui demandent la diffusion d'une séquence de données, pendant le stockage temporaire des blocs de données avant leur émission.

## Patentansprüche

1. Datenausgabevorrichtung (S) mit einem hohen Datendurchsatz, zum simultanen Bedienen von mehreren Benutzern (9-11), mit
- einer Datenbank (1) für Datensequenzen (6-8), welche für die Benutzer zugreifbar sind, wobei jede Datensequenz aus mehreren Datenblöcken gebildet ist, die komplett oder in Teilen in Datenspeicherträgern gespeichert sind,
- Schaltungen (12, 22) zum Inverbindungbringen der Datenbankträger mit den Benutzern, für ein Extrahieren der Datensequenzen außerhalb der Datenbank auf von den Benutzern ausgegebene Aufforderungen hin und Senden derselben zu den Benutzern,
dadurch gekennzeichnet, daß die Verbindungsschaltungen
- einen Pufferspeicher (43) enthalten, zum temporären Speichern der aus den Datenträgern extrahierten Datenblöcke, vor deren Emission und zum Verzögern einer Übertragung einer Datensequenz zu einem der Benutzer,
- Schaltungen enthalten zum simultanen Übertragen einer gleichen Datensequenz an mehrere Benutzer und
- Mittel (39-41) enthalten zum Senden von Datenblöcken außerhalb des Pufferspeichers von Datenblöcken, die dort gespeichert sind, nach dem Ablaufen der Verzögerung, und zwar in einer Reihenfolge, die einer geeigneten Sequenzabfolge entspricht, wobei die Reihenfolge unabhängig von der temporären Abfolge ihrer Extraktion außerhalb der Datenbank ist.

2. Datenausgabevorrichtung nach Anspruch 1, dadurch gekennzeichnet, daß die Mittel zum Verzögern Mittel (17) zum Verzögern der auf eine Anforderung hin erfolgenden Emission bei der Extraktion enthalten.

3. Datenausgabevorrichtung nach einem der Ansprüche 1 bis 2, dadurch gekennzeichnet, daß die Mittel zum Verzögern Schaltungen zum Verzögern um eine festgelegte Zeitdauer enthalten, welche durch einen festgelegten Wert beschränkt ist.

4. Datenausgabevorrichtung nach Anspruch 3, dadurch gekennzeichnet, daß die Mittel zum Verzögern um eine Zeitdauer, die durch einen festgelegten Wert beschränkt ist, auf eine Benutzeraufforderung hin deaktiviert werden.

5. Datenausgabevorrichtung nach Anspruch 3, dadurch gekennzeichnet, daß die Mittel zum Verzögern um eine Zeitdauer, die durch einen festgelegten Wert beschränkt ist, periodisch deaktiviert werden.

6. Datenausgabevorrichtung nach einem der Ansprüche 1 bis 5, dadurch gekennzeichnet, daß die Mittel zum Verzögern der Übertragung eine Datensequenz zu einem ersten Benutzer die Schaltungen zum Verzögern der Übertragung um eine variable Zeitdauer enthalten, beginnend mit der Aufforderung des ersten Benutzers und endend, wenn die Anzahl von Benutzern, welche die Aufforderungen identisch mit den Datenbanken adressiert haben, eine Anzahl (N) erreicht haben, welche im voraus festgelegt ist.

7. Datenausgabevorrichtung nach Anspruch 6, dadurch gekennzeichnet, daß die im voraus festgelegte Anzahl im voraus durch ein Zählen der Anzahl der Benutzer festgelegt ist, die die Aufforderungen an die Datenbank adressieren, während einer vorangehenden Datenperiode und daß die im voraus festgelegte Anzahl mit der Frequenz der Anfragen während der vorangehenden Periode ansteigt.

8. Datenausgabevorrichtung nach einem der Ansprüche 1 bis 7, dadurch gekennzeichnet, daß sie eine Maschine mit einer parallelen Architektur enthält, zum Bilden einer Ansammlung von Datenbanken, von Verbindungsschaltungen, von Pufferspeichern und von Übertragungsschaltungen.

9. Datenausgabevorrichtung nach einem der Ansprüche 1 bis 3, dadurch gekennzeichnet, daß sie
- Mittel zum Einbringen von i ersten Blöcken einer Sequenz in einen Pufferspeicher (43) enthält, und
- Mittel (40) enthält zum Angeben der Einbringung eines Blocks mit dem Rang i+1 in den Speicher, sobald der erste der i Blöcke dort eingebracht und extrahiert ist, und wobei dies weiter für nachfolgende Blöcke durchgeführt wird.

10. Datenausgabevorrichtung nach Anspruch 9, dadurch gekennzeichnet, daß die Anzahl i von Datenblöcken, die zu Anfang in den Pufferspeicher eingebracht werden, einen höheren Nominaldatendurchsatz als den Nominalemissionsdatendurchsatz für jeden der Datenträger aufweisen.

11. Datenausgabevorrichtung nach einem der Ansprüche 9 bis 10, dadurch gekennzeichnet,
- Mittel (17) enthalten, zum Verzögern einer Übertragung einer Datensequenz zu einem Benutzer, und daß sie
- Verbindungsschaltungen enthält, die Mittel (19) enthalten zum simultanen Übertragung einer gleichen Datensequenz zu mehreren Benutzern.

12. Datenausgabevorrichtung nach einem der Ansprüche 9 bis 11, dadurch gekennzeichnet, daß sie
Mittel zum Einrichten einer Benutzerliste enthält, die eine Weiterreichung einer Datensequenz beantragen, während den temporären Speichern der Datenblöcke vor ihrer Übertragung.

## Claims

1. Server (S) with a high data rate for serving several users (9-11) simultaneously, comprising
- a base (1) of data sequences (6-8) that can be consulted by these users, each data sequence being made up of several blocks of data stored so as to be distributed through all or part of the data storage media,
- inter-connecting circuits (12, 22) between the media of this base and these users, so as to extract data sequences from out of this base in response to requests issued by these users and to send them to these user destinations,
- a buffer memory (43) to store temporarily blocks of data extracted from these media, before they are transmitted, so as to delay a transfer of a data sequence to one of these users,
- and means (39-41) for transmitting from this buffer memory, at the end of this delay, blocks of data stored therein, in an order that will ensure smooth transmission of these sequences, this order being independent of chronological order and the order in which they were extracted from the base.

2. Server as claimed in claim 1, characterised in that the delaying means have means (17) for initiating a delay in transmission from the time of extraction.

3. Server as claimed in one of claims 1 to 2, characterised in that the delaying means have circuits for initiating a delay of a duration limited by a fixed value.

4. Server as claimed in claim 3, characterised in that the means for initiating a delay of a duration limited by a fixed value are activated by a first request from a user.

5. Server as claimed in claim 3, characterised in that the means for initiating a delay of a duration limited by a fixed value are activated periodically.

6. Server as claimed in one of claims 1 to 5, characterised in that the means for delaying the transmission of a data sequence to a first user has circuits to delay this transmission by a variable duration which commences with the request from this first user and ends when the number of users addressing identical requests to this base has reached a previously set number (N).

7. Server as claimed in claim 6, characterised in that the previously set number is determined beforehand by counting the number of users addressing requests to the base over an earlier given period of time, and in that this pre-set number increases with the frequency of these requests over this previous period.

8. Server as claimed in one of claims 1 to 7, characterised in that it comprises a machine of parallel architecture to provide the system with data base unit, inter-connection circuits, the buffer memory and transmission circuits.

9. Server as claimed in one of claims 1 to 8, characterised in that it has
- means for loading i first blocks of a sequence into a buffer memory (43), and
- means (40) for calling up for loading into this memory a block with the rank i+1 as soon as the first of the i blocks loaded therein has been extracted, and so on for the subsequent blocks.

10. Server as claimed in claim 9, characterised in that the number i of data blocks initially loaded into the buffer memory is greater than the ratio of the nominal data rate from each of the media to the nominal transmission rate.

11. Server as claimed in one of claims 9 to 10, characterised in that it has
- means (17) for delaying transmission of a data sequence to a user destination, and in that
- the inter-connecting circuits have means (19) for transmitting simultaneously to several users a same sequence of data.

12. Server as claimed in one of claims 9 to 11, characterised in that it has
- means for establishing the list of users requesting transmission of a data sequence whilst the data blocks are being temporarily stored before their transmission.
